# EUROPEAN PATENT APPLICATION

(11) **EP 2 677 520 A1**
(43) Date of publication of application: **25.12.2013**
(21) Application number: 13172720.8
(22) Date of filing: 19.06.2013
(51) Int. Cl.: G11B 27/034, A63B 24/00, G06F 17/30, H04N 21/85

(54) **Automated sport event photographs capture and retrieval system.**

(30) Priority: 19.06.2012 AU 2012902564
(71) Applicant: Garland, Brendan John, Burleigh Waters, QLD 4220 (AU)
(72) Inventor: Garland, Brendan John, Burleigh Waters, QLD 4220 (AU)
(74) Representative: Lawrence, John

(57) **Abstract**

The present invention relates to automated photo capture and retrieval system for sporting events and the like. The present invention provides an automated photo capture and retrieval system for automatically capturing and indexing a still or a moving image of at least one individual or group of individuals within an event, said at least one individual or group of individuals being uniquely identifiable. The system comprising a tracking device (20) adapted to be worn by an individual travelling along a route for the purposes of automatic identification and tracking; a detector (25) for automatically detecting the tracking device of said individuals travelling along the route of the event and when the tracking device is detected a capture signal is sent to one or more cameras (34) distributed throughout the event which are adapted to automatically capture photo and/or video images of one or more individuals in the field of view of the camera; a means of associating and labelling the captured image with the detected identity of said at least one individual or group of individuals (40); a communications network for transmitting the labelled images to a computer (40); a means for automatically editing each image and saving the edited image in an image database (40, 70); and a means of advising at least one individual or group of individuals that a still or moving image of the at least one individual or group of individuals has been captured (41).

## Description

### FIELD OF THE INVENTION

The present invention relates to automated photo capture and retrieval system for sporting events and the like and, in particular, to a system and method for automated photo capture and retrieval using unique person identifiers that allow automated capturing and arranging of photo or video images.

### BACKGROUND OF THE INVENTION

It should be noted that reference to the prior art herein is not to be taken as an acknowledgement that such prior art constitutes common general knowledge in the art.

Sporting events such as marathons, triathlons, and bicycling events are held on nearly every weekend of the year across the nation, particularly during the summer months. It is reasonable to assume that at least one major event with ten thousand or more participants is held on any given weekend somewhere in the world. For example, the Berlin Marathon is a major running and sporting event held annually in Berlin, Germany. The official marathon distance of 42.195 kilometers is set up as a city-wide road race where professional athletes and amateur runners jointly participate. In 2008 with 40,827 enrolled starters from 107 countries, 35,913 official finishers the Berlin marathon is one of the largest and most popular road races in the world.

It is a common practice for event photographers to obtain contracts to photograph such events and provide photos for sale to the event participants after the event is concluded. In the past, photographers have been positioned throughout the course of the sporting event, such as at the starting line, finish line, and at key or particularly picturesque locations along the course or field of the sporting event. For example, in a triathlon photographers would need to be positioned at a location of the swimming leg, the running leg, and the bicycling leg as well as the finish line of the race. The larger the race, the more photographers are needed to photograph the large number of participants in that sporting event. Typically the photographer would devote his or her time to capturing photographs of as many participants as possible. Those skilled in the art will appreciate that the labor costs alone associated with such events due to the number of photographers as well as assistants is quite expensive.

Each photographer can take hundreds or even thousands of pictures during the course of the several hours of the sporting event. Consistent performance of the photographer is a problem. The weak link in nearly all photography applications is the photographer. A proficient photographer will be able to capture some number of flawless pictures, but over a period of hours, the body, fingers and eyes become tired and prone to error. Another problem with human photographers is that nearly all of the pictures are taken in nearly the same perspective, which is at approximately the same height as the sporting event participant. It is often dangerous, if not impossible, for photographers to be positioned at angles of interest, such as on the scaffolding of the finish line, etc.

The traditional process of offering the photographs to the sporting event participants is also costly and problematic. Traditionally, event photographs taken along the event route or finish line are developed and scrutinized for identifying markings, such as "bib numbers" of event participants. The name and mailing address of the event participants who are identifiable by their bib number markings are then cross-checked to a roster that lists all the event participants, their bib or identification numbers and their addresses. Some event participants are not offered the option of purchasing photographs because the identifying bib number markings are not visible in the photographs. This can be due to the bib number being improperly attached to the event participant or lost along the event route, or due to the angle the photograph was taken or a participant obscuring the markings of another.

Todays, passive radio-frequency identification (RFID) transponders, marked with a unique identification number are used in active sports events, to keep track of the competition times of participants. RFID transponders are waterproof glass capsules that contain a silicon chip and an energizing coil. This coil is inactive until moved into a magnetic field, generated by a send antenna in a mat (used to mark the start and finish lines of a race). The transponder then transmits its unique identification number to a receive antenna in a mat. Transponder timing is used in sporting events around the world, including running races, marathons, triathlons, cycling and mountain biking competitions, in-line skating and cross-country skiing. The serial number of a participant's chip is stored in a database for an event allowing the recorded times to be matched with participants' names.

Clearly it would be advantageous if a system could be devised that helped to at least ameliorate some of the shortcomings described above. Accordingly, there is a continuing need for an automated camera system for use during a sporting event. Such an automated system should eliminate the need for multiple photographers and assistants. Such an automated camera system should be capable of being used at multiple positions along a sporting event course or field so as to take a great number of pictures of the participants. Such an automated camera system should also incorporate a less costly and easier to search methodology for finding and ordering photographs of the event. This also includes a process that takes away the labor involved in mapping the participant or athlete to the photo.

### STATEMENT OF THE INVENTION

According to a first aspect, the present invention provides an automated photograph capture and retrieval system for automatically capturing and indexing a still or a moving image of at least one individual or group of individuals within an event, said at least one individual or group of individuals being uniquely identifiable, said system comprising: a tracking device adapted to be worn by an individual traveling along a route for the purposes of automatic identification and tracking; a detector for automatically detecting the tracking device of said individuals travelling along the route of the event, wherein when the tracking device is detected a capture signal is sent to one or more cameras distributed throughout the event which are adapted to automatically capture photo and/or video images of one or more individuals in the field of view of the camera; a means of associating and labelling the captured image with the detected identity of said at least one individual or group of individuals; a communications network for transmitting the labelled images to a processing device; a means for automatically editing each image and saving the edited image in an image database; and a means of advising at least one individual or group of individuals that a still or moving image of the at least one individual or group of individuals has been captured.

Preferably, the tracking sensor may comprise one or more of the following group comprising (a) RFID system; (b) GPS tracking system; (c) Ultrasonic beam system; (d) Infrared beam system; or (e) Video and facial recognition or number recognition system.

Before an event begins said at least one individual or group of individuals may enter their personal identification information into either an event entry form and this information is then saved to an event database or directly into the event database via an online world wide web based form, and wherein the personal identification information saved in the event database is downloaded to a remote server of the automated photo capture and retrieval system prior to an event.

Each tracking sensor may contain a unique identification number which is issued with each tracking sensor to each individual participant and is used to match that particular individual or participant to any relevant captured photo images or video images that contains that individual.

Preferably, in an event which includes some kind of sports equipment, the sports equipment may also comprise a tracking sensor matched to the individuals tracking sensor or the group of individuals tracking sensor.

Preferably, the detector may comprise an RFID two-way radio transmitter-receiver or reader which sends a signal to the RFID tag and reads the response from the RFID tag.

Preferably, the one or more cameras may be adapted to take a photo or video of an individual or group of individuals when the RFID reader receives a response from an RFID tag that an individual or group of individuals are within a sensing area of the RFID tag and reader and within the field of view of the camera. Preferably, the RFID reader may transit wirelessly a signal that an individual is within a sensing area to the one or more cameras to automatically capture the image or video.

Preferably, the RFID tag has a unique identification number and the captured image or video may be automatically transmitted to a remote server, wherein the remote server may automatically align the RFID unique identification number with the captured image to identify the individual or group of individuals.

Preferably, once an image is captured by the camera the means of associating and labeling the detected identity of said individuals may automatically label the captured image of the individual with the serial number or unique identification number of the individual or group of individuals.

Preferably, during an event any one or more of the cameras distributed around the event may capture multiple images or video of the individual or group of individuals, each captured image may be transmitted to a remote server which may automatically align the RFID unique identification number with the captured images or video to identify the individual or group of individuals.

A photographer at an event may take a number of other photos or video manually, wherein the manually recorded images are downloaded to the remote server and are either manually matched with the images taken by the automated photo capture and retrieval system or automatically matched using a facial recognition system or a bib number recognition system to identify the individual or group of individuals.

Preferably, the communications network for transmitting the labeled images of the individuals or group of individuals to the computer may be any one of a digital transceiver using wireless transmission, a wireless file transmitter, or any other form of digital communication used for wireless image transmission.

Preferably, the means for automatically editing each image may include a software photo-editing program. The photo-editing software may automatically correct for such imperfections as clarity, lighting, red-eye, elimination of shadows and the like. Preferably, the photo-editing software may automatically edit the captured image or video using an optimised baseline that it creates from tonal qualities, lighting, clarity and shadows based on a standardised photograph taken at the event.

Preferably, once the captured image is edited by the photo-editing software the image may then be saved in the image database of the remote server.

Preferably, at each event a number of photographers may be assigned to capture images of the event. Each photographer may register with the remote server and creates an individual web page for the display of captured images or video from an event. The individual web pages may be created using templates of web pages which can be edited to suit the photographers individual needs and requirements. Each photographer may save their captured images to the remote server which will automatically edit and align the RFID unique identification number with the captured images or video to identify the individual or group of individuals.

Preferably, when a particular image or video is saved to the photographers website a link may be created on the website which is sent to the individual or group of individuals advising them that an image or video has been captured of the individual or group of individuals at the event and may now be available for purchase from the photographers website. All of the captured images or video from a particular event may be displayed for sale on the photographer's web page for that particular event.

Preferably, the means for advising an individual or groups of individuals that a still or moving image of the individual or group of individuals has been captured by a photographer may include any one of the following including any form of social media, an email, a short message service (SMS) or any other form of contact as provided by the individual or group of individuals when filling out their entry form. The links advising an individual or group of individuals of a captured image or video may be available immediately after completing the particular event.

Preferably, an auto archiving function which may create a collection of historical records of an individual or group of individuals and any pictures or video taken at the particular event. The historical information may include the individuals name, birthday, email, phone number, mobile phone number, social media details, home address as well as information regarding the event from which the photo or video was captured. If an individual or group of individuals compete or enter a further event the archived information may be sent as a link to the individual or group of individuals along with a link to the further event in which the individual or group of individuals are entered to allow the individual or group of individuals to purchase all such photos or video images that are available.

Preferably, upon an anniversary of an event or any other significant event a link from the archive may be sent to an individual or group of individuals advising them of the photos or video available for purchase.

In accordance with a further aspect, the present invention provides a software-based application for photograph capture and retrieval for automatically capturing and indexing a still or a moving image of at least one individual or group of individuals within an event, said at least one individual or group of individuals being uniquely identifiable, the software based application comprising: a program for recording and saving personal identification information about an individual or group of individuals into an event database and subsequently generating and issuing a unique identifier for each individual or group of individuals in the event; a program for associating and labelling the unique identifier with a captured photo or video; a program for automatically editing each image or video and saving the edited image or video in an image database; and a program for advising at least one individual or group of individuals that a captured image or video of the individual or group of individuals has been captured; and a program for archiving the captured photo or video and personal identification information.

In accordance with a still further aspect, the present invention provides a method of photograph capture and retrieval for automatically capturing and indexing a still or a moving image of at least one individual or group of individuals within an event, said individual or groups of individuals being uniquely identifiable, the method comprising: associating an individual or group of individuals with a tracking device for the purpose of automatic identification and tracking; detecting the tracking device of said individuals travelling along the route of the event; capturing photos or video of an individual or group of individuals using one or more cameras distributed throughout the event and adapted to automatically capture photo and/or video images of one or more individuals or group of individuals when the tracking device is detected and the individual or group of individuals are in the field of view of the camera; transmitting the captured image to a computer; associating the captured image or video with the information from the tracking device for the individual or group of individuals; automatically editing each image and saving the edited image in an image database; advising an individual or groups of individuals that a photo or video of the individual or group of individuals has been captured; and archiving the captured image or video with the personal identification information of the individual or group of individuals.

In accordance with a still further aspect, the present invention provides a business method for distributing an image or video of individuals, multiple individuals or groups of individuals within an event, said individuals or groups of individuals being uniquely identifiable, the method comprising the steps of: (a) associating an individual or group of individuals with an RFID tag for the purpose of automatic identification and tracking; (b) capturing photos or video of an individual or group of individuals using one or more cameras distributed throughout the event and adapted to automatically capture photo and/or video images of one or more individuals or group of individuals in the field of view of the camera; (c) transmitting the captured image to a computer; (d) associating the captured image or video with the information from the RFID tag for the particular individual or group of individuals; (e) automatically editing each image and saving the edited image in an image database; (f) providing a link to the captured photo or video to promote the sale of the captured photo or video of an individual or group of individuals; and (g) distributing the selected image in which the individual or group of individuals is captured.

### BRIEF DESCRIPTION OF THE DRAWINGS

The present invention will be understood more fully from the detailed description given hereinafter and from the accompanying drawings of the preferred embodiment of the present invention, which, however, should not be taken to be limitative to the invention, but are for explanation and understanding only.
Figure 1 illustrates a schematic diagram of an embodiment in accordance with the present invention;
Figure 2 shows an example flow chart of the present invention in use in a triathlon in accordance with the present invention;
Figure 3 shows a flow chart of the automated photography process in accordance with an embodiment of the present invention;
Figure 4 shows a flow chart of the web factory process in accordance with an embodiment of the present invention;
Figure 5 shows a flow chart of the photographers login process in accordance with an embodiment of the present invention; and
Figure 6 shows a flow chart of the auto-archive process in accordance with an embodiment of the present invention.

### DETAILED DESCRIPTION OF THE PREFERRED EMBODIMENTS

The following description, given by way of example only, is described in order to provide a more precise understanding of the subject matter of a preferred embodiment or embodiments.

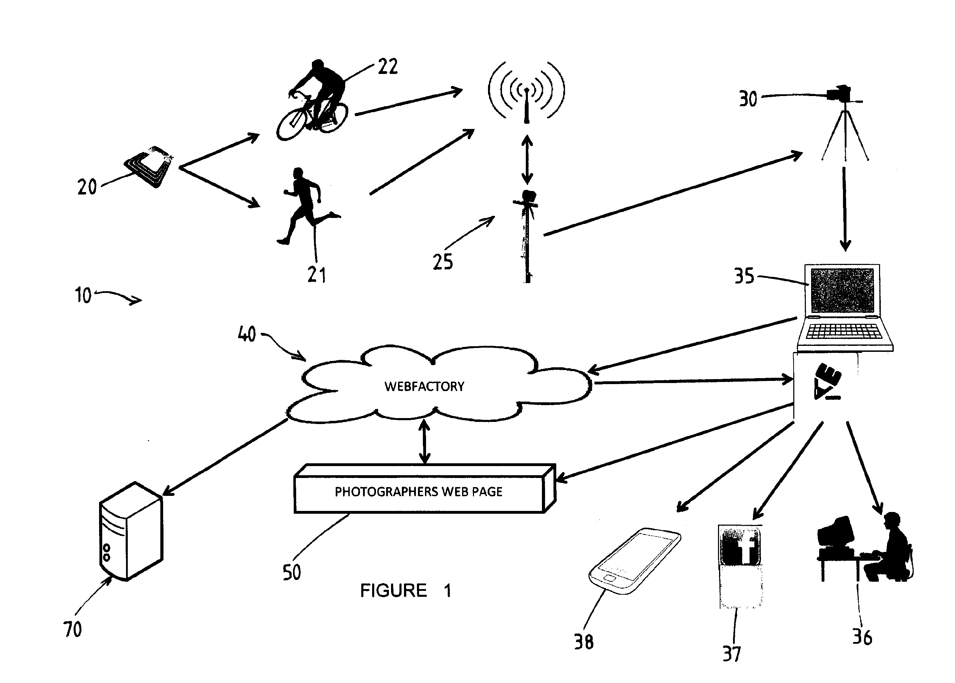

Fig. 1 illustrates a schematic diagram of a photo capture and retrieval system 10 for automatically capturing and indexing a still or a moving image of multiple individuals or groups of individuals within an event. An event is taken to mean any type of gathering in which individuals or groups of individuals come together to compete against one another, for example, a sports competition or sporting event.

Sporting events such as marathons, triathlons, bicycling events and the like are held on nearly every weekend of the year across the nation. For example, the Berlin Marathon is a major running and sporting event held annually in Berlin, Germany. In 2008 with 40,827 enrolled starters from 107 countries, 35,913 official finishers the Berlin marathon is one of the largest and most popular road races in the world. The number of participants provides the race organisers with a logistical nightmare. Each runner is required to complete an entry form either by paper or electronic and the details of each participant is stored in an electronic database. Each participant is then issued with a bib number which identifies each individual runner. With improvements in technology race organisers now provide each participant with a timing chip to be worn by the participant in an event to enable precise timing of the participant in an event. The timing chips provide the ability to track runners from the second they cross the start line to when they reach the 5-kilometer point, to halfway through the event and the all-important finish line or at any point during the event.

Timing chips are typically encased in a hard plastic ring and given to each runner in their race packet prior to the event. The morning of the race, marathoners tie the ring into their shoelaces. Antennas sheathed in wide, rubber mats are positioned along the course. When the marathoner steps on the rubber mat across the starting line, his individual chip is electronically recognized by the timing system, and his time begins. Likewise, any time he or she steps on one of the specialty mats along the course, a computer records the accumulated time to that point in the race.

Passive Radio-frequency identification (RFID) or timing chips 20 are used as a wireless non-contact system that uses radio-frequency electromagnetic fields to transfer data from a tag 20 attached to an object 21 or 22, for the purposes of automatic identification and tracking.

The RFID tag 20 contains electronically stored information which can be read from up to several meters (yards) away. In an RFID system tags 20 are typically incorporated with reader 25 or a two way radio transmitter-receivers called interrogators which send a signal to the tag 20 and read its response. The readers 25 generally transmit their observations to a computer system running RFID software or RFID middleware. The tag's 20 information is stored electronically in a non-volatile memory. The RFID tag includes a small RF transmitter and receiver. An RFID reader 25 transmits an encoded radio signal to interrogate the tag 20. The tag 20 receives the message and responds with its identification information. This may be only a unique tag serial number, or other specific information. The tags 20 are typically called a passive tag since it has no battery. Instead, the tag 20 uses the radio energy transmitted by the reader 25 as its energy source. Since tags 20 have individual serial numbers, the RFID system design can discriminate several tags 20 that might be within the range of the RFID reader 25 and read them simultaneously.

The tags 20 are typically a read-only device, having a factory-assigned serial number that is used as a key into a database, in this case a key to the electronic participants database 91. The readers or interrogators 25 are set up to create a specific interrogation zone which can be tightly controlled. This allows a highly defined reading area for when tags 20 go in and out of the interrogation zone.

While RFID tags have been described above, there exist a number of other options available for tracking and automatic identification. For example, a Global Positioning System (GPS) may be used where a GPS is a space-based satellite navigation system that provides location and time information in all weather conditions, anywhere on or near the Earth where there is an unobstructed line of sight to four or more GPS satellites. Ultrasonic and IR beam sensors are suitable for general proximity/presence detection. Furthermore, video systems typically perform a combination of motion detection and by searching for certain characteristic features in the image. This could include facial recognition software or bib number recognition software. Also, thermal sensors can track users by measuring body heat. Bluetooth tracking networks can be developed using wireless sensors and Internet uplinks.

By way of further examples we provide the following and in particular in the use of facial recognition, bib number recognition and GPS tracking. The facial recognition could be used in instances where there are many athletes crossing a timing mat simultaneously and so there are many people in the same photograph. The facial recognition and also the bib number recognition would pick up on the individuals and crop them out in the photo as part of the auto editing process. Alternatively, facial recognition and bib number recognition could be used if a different type of sensor was used to trigger the camera instead of the RFID chip. Once again this would aid the photographer in situations where a number of competitors cross a detector at the same time. This also provides the photographer with further options and locations as to where photographs can be taken. For example they are not only limited to where an RFID timing mat is located. This provides the option of using different sensors as triggers as that would not limit the photographers location of the photos, ie it would not need to be taken just where there are timing mats.

As stated above the individual or group of individuals must first register for any event prior to competing in the event. As is the case with the Berlin Marathon some 40,000 competitors registered for the marathon. The information collected in the registration process includes but is not limited to the name of the competitor, address, birth date, phone number or mobile phone number, email address and a photo of the participant. All of this information is saved in an event database and also transmitted to the remote server 40 before the event begins. The information is recorded and a tag 20 is assigned to each competitor. The tag 20 may contain all of the abovementioned personal information about a competitor or the tag may simply contain a serial number which uniquely identifies the individual or group of individuals and provides the reference serial number which is matched with the personal information in the event database.

The readers 25 are at least placed at the start of an event and at the finish line of the event. However, it should be noted that a reader can be placed at any number of points throughout an event and the present embodiment of the invention is not limited to any particular number of readers 25. The readers 25 are designed to send a wireless signal to activate a camera 30 to take a photo. It should be noted that in this embodiment a camera 30 is used however any type of camera or video recorder can be used without departing from the present invention. It should also be noted that the activation signal from the reader 25 to the camera 30 could be transmitted by a wired signal.

Once the reader 25 activates the camera 30 to take a photo, the photo taken is either transmitted in real-time to a computer 35 for further processing or the photo is transmitted to the computer 35 after a predetermined delay. The photo is delivered to the computer 35 for further processing. In this example a computer is used however it should be obvious that any processing device may be used. For example, any device that deals with the input and output of information does some form of processing on that information, some with more complexity than others. Such devices include IPAD's, computers, mobile computing devices and some smart phones. Also, it should be noted that some modern cameras already have the ability to automatically transmit the photograph over the internet and could be easily used in the present embodiment of this invention.

Once the photo and tag 20 serial numbers has been captured and transmitted to the computer 35, the computer 35 then transmits the received data to a remote server 40 using an internet connection. Located on the remote server 40 is a proprietary software program which as a first task is programmed to associate the photo taken with the serial number of the tag 20, this matches up with the photo which has been captured.

In a further embodiment the serial number of the tag 20 may be sent to the camera 30 and associated with the captured photo prior to being transmitted to the remote computer 35. In this embodiment the camera 30 records the tag 20 serial number with the captured photo in a similar way as the camera would record the date and time of when a photo is taken. Preferably, the tag 20 serial number and the photo or the individual or group of individuals may be associated to each other based on the time each was captured. For example, the tag reader 25 and using the timing system which in this instance is used to record the competitor's elapsed time in the particular event would record this time and at the same time the time when the photo is captured would also be recorded. By associating the tag 20 time of crossing or entering the tag reader 25 with the time the photo of the individual or group of individuals is recorded is another method of automatically identifying the particular photograph. This association of times would be carried out by the proprietary software program located on the remote server 40.

As will be explained in more detail below the proprietary software 40 includes a program to associate the captured image and the tag serial number, a program to automatically edit the captured picture and further process the image in preparation for the sale of the image.

It is a common practice for event photographers to obtain contracts to photograph such events and provide photos for sale to the event participants after the event is concluded. In line with the present embodiment the proprietary software 40 has been designed to allow any photographer to register to use the proprietary software 40. A photographer once registered would be assigned a personal web page 50 which they can design and modify to suit their particular requirements.

Once the image has been auto-edited a link to the photos on the photographer's web page 50 is sent to the participant or competitor to allow them to view the photos or video which is available to them for purchase. This link may be sent to the individual or group of individuals email 36, mobile phone 38 in the form of an SMS or may be linked to the competitor's social media page 37.

Also included in the proprietary software 40 is an archiving program 70 which saves all the photos from any particular event but also associates any other event which a competitor has competed in to construct an archive for any particular individual or group of individuals.

Preferably, the archive program 70 may be a stand-alone program rather than forming a part of the proprietary software 40.

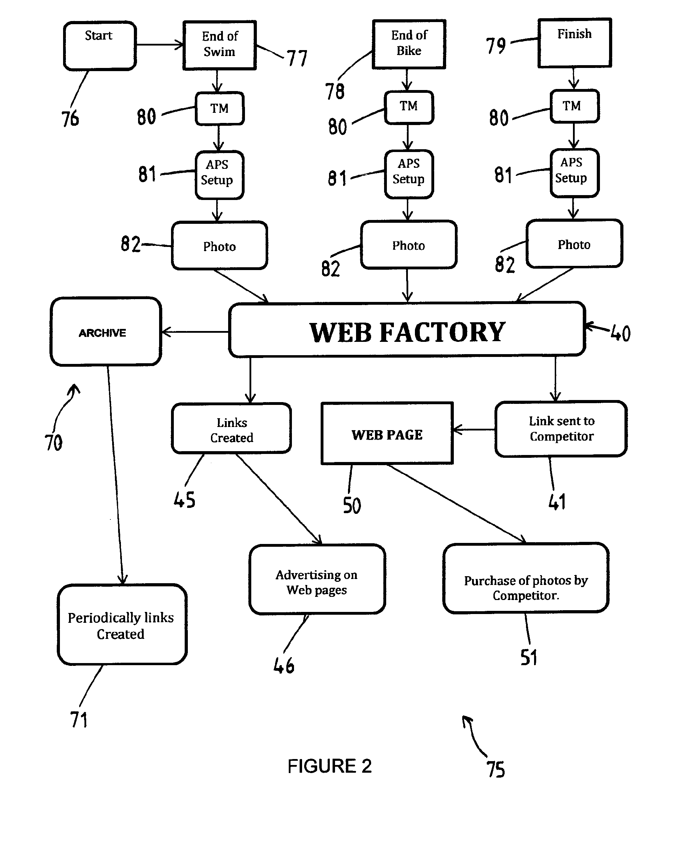

Fig. 2 illustrates by way of an example only, the use of the system for capturing and retrieving photos or video of an individual or group of individuals competing in a triathlon 75. A triathlon 75 is a multi-sport event involving the completion of three continuous and sequential endurance events. While many variations of the sport exist, triathlon 75, in its most popular form, involves swimming, cycling, and running in immediate succession over various distances. In Fig. 2 the triathlon starts at 76 each competitor would be given a waterproof tag 20 which may be attached to the bib number of the competitor. As the competitor passes the start line of the swim the tag reader 25 activates the timing system to begin the swim leg of the triathlon 75. At the end of the swim 77 the competitor leaves the water and crosses the timing mat 80 which firstly records the competitor's time for the swim leg of the triathlon 75 but also initiates the automated photography system to setup and capture a photo 82 of the competitor as they pass over the timing mat 80. The photo 82 is sent to the computer 35 and then transmitted over an internet connection to the remote server 40. A similar set of events occur at the end of the bike leg 78 and at the finish line at the end of the run leg 79. All legs of the triathlon 75 ending with the capture of an image or video 82.

As previously discussed the remote server 40 has the proprietary software running on the remote server 40. The software firstly associates the captured image with the serial number of the tag 20 to identify the competitor. The captured image is then automatically edited. Preferably this is achieved with the use of a software photo-editing program. The software photo-editing software will typically correct such imperfections such as clarity, lighting, red-eye, elimination of shadows and the like. The photo-editing software automatically edits the captured image or video using an optimised baseline that it creates from tonal qualities, lighting, clarity and shadows of a standardised photograph taken on the day of the event.

Once the editing is competed the image is then saved in the image database on the remote server 40. A link 41 advising the competitor that a photo or video of them has been captured during the triathlon 75 is sent to the competitors email, mobile phone by SMS or the link is placed on the competitor's social media page. The link is also sent to the photographer's web page 50 from where the competitor is able to purchase 51 a photo or video in a preferred format. The competitor may also perform some simple editing themselves on the photographer's website. For example, the competitor may add a border or background, crop the image to suit or change the layout of the photo or even include old archived images with their newly purchased images from the current event. The options are only limited by what is available on the photographer's website. Furthermore by way of further marketing the competitor may add the captured photo to his/her finisher certificate for a better experience for the athlete.

A link 45 is also created to the event webpage where the promoter may use the photos or video captured for marketing or advertising 46.

Finally, the edited image is saved to the archive 70 with the information required to identify the competitor. Periodically and typically at anniversaries of the competitors involvement in an event a link 71 may be created and sent to the competitor as a possible further way of promoting and selling the images or video.

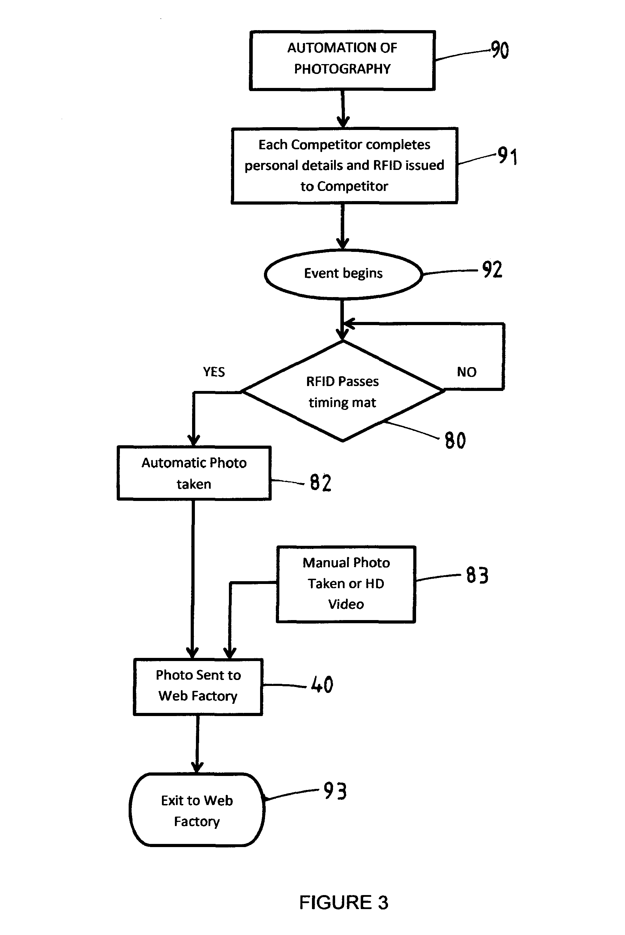

Now turning to each process involved in the system of capturing an image or video in more detail. Each step of the process will now be explained with reference to Figs. 3 to 6.

Fig. 3 shows a flow chart of the process of the automatic photo or video capture 90. As has been described above the RFID tag timing system can be either a user adapted system or the proprietary software on the remote server can be adapted to work with professionally designed timing systems. Preferably the professionally designed timing system which is used by each event can be linked with the proprietary software on the remote server 40.

Each competitor in an event fills in an entry form 91 generally requiring name, address, birth date, phone number, mobile number, email address etc. Alternatively, a photograph of the competitor may also be taken to assist in further processes and identification. This information is recorded and a RFID tag serial number is assigned to that individual with the information. All this information is downloaded to the proprietary software on the remote server 40 before the race starts 92. During the race, a signal is created by the RFID timing system when it passes over the timing mat 80. This signal triggers the camera to automatically take a photo 82.

The photo is then instantly sent to the remote server 40 where it is aligned to the information recorded against the tag serial number 91. This process is repeated for all photos taken automatically by the camera 30. The photographer is also able to take as many "location photos" as they wish and download them to the remote server 40 for editing and alignment. These will appear on each competitor's purchase page on the photographer's web page which is described below.

Any additional manual photographs 83 of competitors taken by the photographer can be either manually linked to that individual competitor's photo pages if the photographer is able to, or they will appear in a miscellaneous file created for that event on the remote server 40. The additional manual photographs can be added to competitors archive file in a couple of ways. Firstly, by using the stored photograph of the competitor and facial recognition software or by using number recognition software to link the bib number to the archive file of the competitor. The number and facial recognition software will enable the photographer's to manually uploaded images from the event, so that those photographs will be stored in the correct individuals archive file.

This same process applies if a photographer chooses to use any HD digital video camera. The video camera records the race from its standing point, aligning the frame of the footage triggered by RFID timing signal to be aligned with the information registered with RFID serial number.

The automated photography stage 90 is now complete and at step 93 the automated photography stage is exited 93 to the next stage

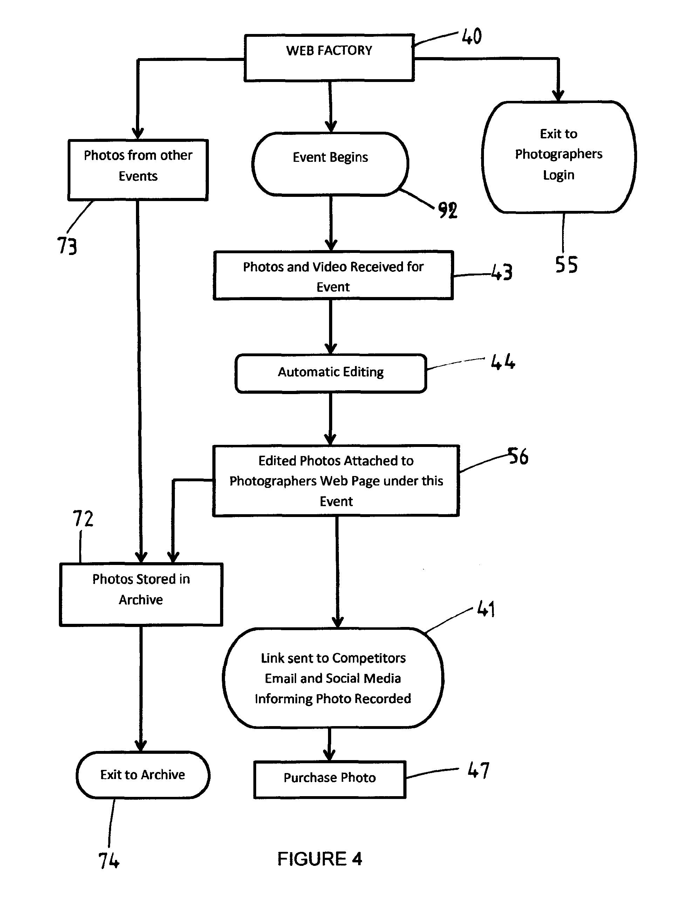

Fig. 4 illustrates a flow diagram of the use of the proprietary software on the remote server 40. As described above the proprietary software performs a number of unique services in the process of capturing and retrieving an image or video. Firstly, the proprietary software program is used to associate the photo taken with the serial number of the tag 20. The program is then used to automatically edit 44 the captured picture 43 and further process the image in preparation for the sale of the image.

The process begins as soon as the event starts 92 and photos and digital footage is received 43 and edited 44 for such imperfections as clarity, lighting, red eye, elimination of shadows etc. by inbuilt photo editing software. The software will have an optimised base line that it works from regarding the tonal qualities, lighting, clarity and shadows of a photograph. It will then automatically adjust each photograph that runs through it to that optimal level. It will automatically detect any red eye and rectify it.

Each edited photo or video at step 56 is then attached to the photographer's webpage under that particular event. Also a copy of the edited photo or video and the relevant individual or group of individual's personal information is saved to the archive 72 and the program then exits ay step 74 to the archive program 70. Another unique option which the proprietary software provides is the ability link photos of previous events 73 which an individual may have competed in. This feature will be described in more detail below with reference to the archive program 70.

Each competitor who has competed in the event will then receive a link 41 which is sent to the competitors email, mobile phone in the form of an SMS or is linked to their social media page. Social media includes web-based and mobile based technologies which are used to turn communication into interactive dialogue among organizations, communities, and individuals. For example, Facebook, Twitter, LinkedIn to name but a few. It should be noted that the social media is not limited to only those mentioned or illustrated in the present application.

Once all photos are downloaded for that event, the software creates a link 41 advising each individual that photo/photos/footage has been recorded of their participation of the event and are ready for purchase. This will be instantaneous, meaning that the photographs are available to be viewed by the competitor immediately after finishing the event.

Once the individual competitor clicks on their personalised link 41 to their photographs, they are given options as to how they would like to purchase 47 their photos, not only size and format (ie printed or jpeg) but they will also have the ability to crop the photos and choose whether they would like to print a poster, a canvas print or create a collage of two or more photos which may include the location photos that the photographer has taken at that event. Furthermore the competitor may add a border or background to the current picture. Also, by way of further marketing the competitor may add the captured photo to his/her finisher certificate for a better experience for the athlete.

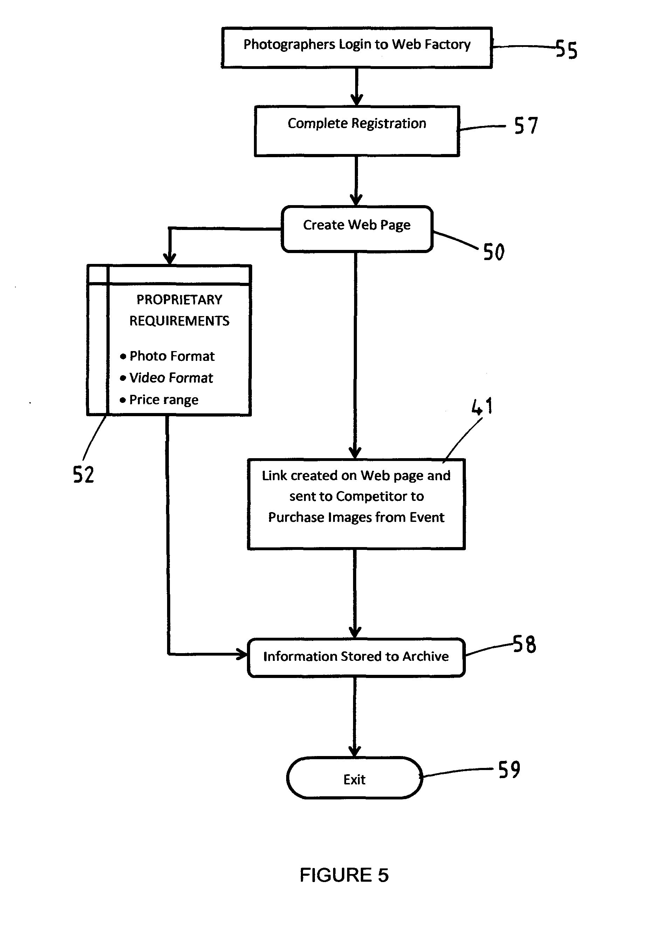

At step 55 the program enters the photographer's login page. Each photographer who takes photographs at an event will need to register in order to use the proprietary software and the other features of the unique capture and retrieval system. As shown in Fig. 5 each photographer will receive an individual log in number, giving them a secure platform off the proprietary software and the remote server 40.

Once the photographer has completed the registration process 57, they will be able to create their own personalised web page 50. The creation of this individual web page 50 is done by way of many options and variants using templates that the applicant has created. These options include many things from the overall look of the page and the way in which the photographers' photos and digital footage are displayed, through options for animation and video feed, to different alternatives for pricing and the display of same.

There will be certain aspects 52 of the web page 50 that will be compulsory for example the format for photograph and digital footage for purchase ie: electronic download jpeg, photo print, canvas, collage, poster, usb stick. Each photographer will have a nominated range of prices to select to each type of purchase (jpeg, photo print, canvas, collage, poster, usb stick)

At step 41 the link is created on the photographer's web page 50 which a competitor can access to purchase and view photos or video which has been captured during the event. This includes all photos and digital footage taken are attached to the photographers own web page 50. Typically the photos will appear on the photographer's web page 50 under a section pertaining to that particular sporting event. At step 58 all photos and digital film taken are also stored in the Archive program 70 and the program exits at step 59.

Preferably in relation to video footage taken the proprietary software will automatically edit the film from nominated time before trigger to nominated time after trigger e.g. 6 seconds before trigger and 12 seconds after trigger to create a snippet of film.

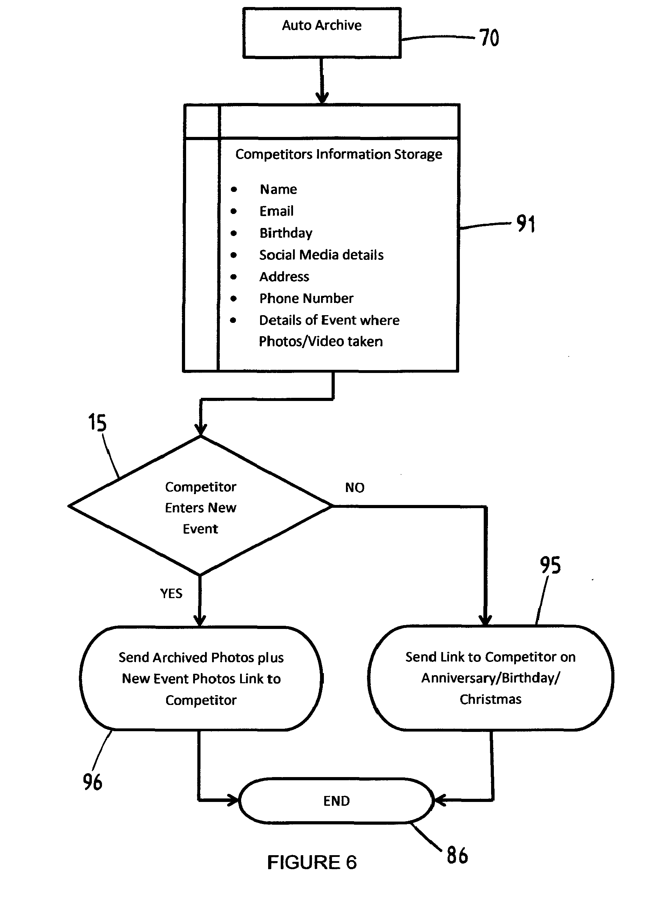

Fig. 6 shows a flow chart of the archive program 70. As the name suggest an archive 70 is a collection of historical records. In the capture and retrieval system each photo which is auto archived, is stored containing information. This information 91 can contain the competitors name, birthday, email, all social media details, home address, phone number and race details the photos and digital footage was taken at. Basically this includes any information 91 which can be used for alignment in the future.

If a competitor enters a new event 15 and the archive program has previous photos or video of the competitor then at 96 the archive program will automatically activate a send old photos link to allow the competitor the opportunity to view and maybe purchase old archived photos as well as any new photos or video taken at the new event 15. Therefore the archived photos or video will be automatically sent as a link to the individual making them, along with the current event photographs available for purchase.

Another option which the archive program 70 allows is if a competitor does not compete in any further events for any reason the archive program can be used for automatic marketing. For example, each competitor in the future at times of race anniversary, Christmas or birthdays will receive a link to the archived photos or video for purpose of purchasing the archived photos or video.

While the above examples exemplify the use of the system for capture and retrieval of photos or video in sporting events it should be noted that the system can be used for other events without departing from the invention. For example, the capture and retrieval system could be used as a system in which a photographer at an event such as a wedding could automatically or manually download his photographs to the proprietary software for automatic editing, providing the photo link to the photographers website for the purchase of photos and also the ability to be able to archive the photos from the particular event for future use.

### ADVANTAGES

The proprietary software is used to automatically take photos as each athlete crosses the timing point or mat and stamps each photo with the tag chip number. This automated process takes away the labour involved in mapping the athlete to the photo and allows for quick and easy publishing of the race photos. When an athlete is finished, he can immediately see his own photos. By way of further marketing the competitor may add the captured photo to his/her finisher certificate for a better experience for the athlete.

The proprietary software and the system for capturing and retrieval of photos or video provides a complete process which begins with the automatic capture of the image through the use of established timing systems and automatic cameras or video machines. Once an image is captured by the camera the proprietary software provides a means of automatically associating and labelling the detected identity of the individuals to the captured image. The proprietary software also provides for the automatic photo or video editing which provides photo-editing software which automatically corrects for such imperfections as clarity, lighting, red-eye, elimination of shadows. The photo-editing software automatically edits the captured image or video using an optimised baseline that it creates from tonal qualities, lighting, clarity and shadows from a standardised photograph from the event. Finally the ability to automatically create an archive for each competitor provides the proprietary software with the ability to establish links based on the archived photos or video for such events as anniversaries. Furthermore, the archive program can be used by a competitor to analyse their previous performance in an event and record any change or hopefully benefit which a competitor has achieved in the same event.

### VARIATIONS

It will be realized that the foregoing has been given by way of illustrative example only and that all other modifications and variations as would be apparent to persons skilled in the art are deemed to fall within the broad scope and ambit of the invention as herein set forth.

Throughout the specification any mention of photographs is also taken to include video footage and likewise any mention of video footage is also taken to include photos, photographs or still images produced from video footage.

In the specification the term "comprising" shall be understood to have a broad meaning similar to the term "including" and will be understood to imply the inclusion of a stated integer or step or group of integers or steps but not the exclusion of any other integer or step or group of integers or steps. This definition also applies to variations on the term "comprising" such as "comprise" and "comprises".

## Claims

1. An automated photograph capture and retrieval system for automatically capturing and indexing a still or a moving image of at least one individual or group of individuals within an event, said at least one individual or group of individuals being uniquely identifiable, said system comprising:
a tracking device adapted to be worn by an individual traveling along a route for the purposes of automatic identification and tracking;
a detector for automatically detecting the tracking device of said individuals travelling along the route of the event, wherein when the tracking device is detected a capture signal is sent to one or more cameras distributed throughout the event which are adapted to automatically capture photo and/or video images of one or more individuals in the field of view of the camera;
a means of associating and labelling the captured image with the detected identity of said at least one individual or group of individuals;
a communications network for transmitting the labelled images to a processing device;
a means for automatically editing each image and saving the edited image in an image database; and
a means of advising at least one individual or group of individuals that a still or moving image of the at least one individual or group of individuals has been captured.

2. An automated photograph capture and retrieval system in accordance with claim 1, wherein said tracking device and detector comprises one or more of the devices chosen from the group consisting of:
(a) RFID system;
(b) GPS tracking system;
(c) Ultrasonic beam system;
(d) Infrared beam system; or
(e) Video and facial recognition or number recognition system.

3. An automated photograph capture and retrieval system in accordance with claim 1 or claim 2, wherein before an event begins said at least one individual or group of individuals enters their personal identification information into either an event entry form and this information is then saved to an event database or directly into the event database via an online world wide web based form, and wherein the personal identification information saved in the event database is downloaded to a remote server of the automated photo capture and retrieval system prior to an event.

4. An automated photograph capture and retrieval system in accordance with any one of the preceding claims, wherein each tracking sensor contains a unique identification number which is issued with each tracking sensor to each individual participant and is used to match that particular individual or participant to any relevant captured photo images or video images that contains that individual.

5. An automated photograph capture and retrieval system in accordance with any one of the preceding claims, wherein in an event which includes some kind of sports equipment, the sports equipment also comprises a tracking sensor matched to the individuals tracking sensor or the group of individuals tracking sensor.

6. An automated photograph capture and retrieval system in accordance with any one of the preceding claims, wherein a photographer at an event takes a number of other photos or video manually, wherein the manually recorded images are downloaded to the remote server and are either manually matched with the images taken by the automated photo capture and retrieval system or automatically matched using a facial recognition system to identify the individual or group of individuals.

7. An automated photograph capture and retrieval system in accordance with claim 1, wherein the communications network for transmitting the labelled images of the individuals or group of individuals to the computer is any one of a digital transceiver using wireless transmission, a wireless file transmitter, or any other form of digital communication used for wireless image transmission.

8. An automated photograph capture and retrieval system in accordance with claim 1, wherein the means for automatically editing each image includes a software photo-editing program, wherein the photo-editing software automatically corrects for such imperfections as clarity, lighting, red-eye, elimination of shadows and the like.

9. An automated photograph capture and retrieval system in accordance with claim 8, wherein the photo-editing software automatically edits the captured image or video using an optimised baseline that it creates from tonal qualities, lighting, clarity and shadows based on a standardised photograph taken at the event.

10. An automated photograph capture and retrieval system in accordance with claim 8 or claim 9, wherein once the captured image is edited by the photo-editing software the image is then saved in the image database of the remote server.

11. An automated photograph capture and retrieval system in accordance with claim 1, wherein the means for advising at least one individual or group of individuals that a still or moving image of the individual or group of individuals has been captured by a photographer includes any one of the following including any form of social media, an email, a short message service (SMS) or any other form of contact as provided by the individual or group of individuals when filling out the event entry form, wherein the means for advising an individual or group of individuals of a captured image or video is available immediately after completing the particular event.

12. An automated photograph capture and retrieval system in accordance with claim 1, further comprises an auto archiving function which creates a collection of historical records of an individual or group of individuals and any pictures or video taken at the particular event, wherein the historical information includes the individuals name, birthday, email, phone number, mobile phone number, social media details, home address as well as information regarding the event from which the photo or video was captured.

13. An automated photograph capture and retrieval system in accordance with claim 12, wherein if an individual or group of individuals compete or enter a further event the archived information is sent as a link to the individual or group of individuals along with a link to the further event in which the individual or group of individuals are entered to allow the individual or group of individuals to purchase all such photos or video images that are available, or when an individual or group of individuals do not enter an even and upon an anniversary of an event or any other significant event a link from the archive will be sent to an individual or group of individuals advising them of the photos or video available for purchase.

14. A software-based application for photograph capture and retrieval for automatically capturing and indexing a still or a moving image of at least one individual or group of individuals within an event, said at least one individual or group of individuals being uniquely identifiable, the software based application comprising:
a program for recording and saving personal identification information about an individual or group of individuals into an event database and subsequently generating and issuing a unique identifier for each individual or group of individuals in the event;
a program for associating and labelling the unique identifier with a captured photo or video;
a program for automatically editing each image or video and saving the edited image or video in an image database; and
a program for advising at least one individual or group of individuals that a captured image or video of the individual or group of individuals has been captured; and
a program for archiving the captured photo or video and personal identification information.

15. A method of photograph capture and retrieval for automatically capturing and indexing a still or a moving image of at least one individual or group of individuals within an event, said individual or groups of individuals being uniquely identifiable, the method comprising:
associating an individual or group of individuals with a tracking device for the purpose of automatic identification and tracking;
detecting the tracking device of said individuals travelling along the route of the event;
capturing photos or video of an individual or group of individuals using one or more cameras distributed throughout the event and adapted to automatically capture photo and/or video images of one or more individuals or group of individuals when the tracking device is detected and the individual or group of individuals are in the field of view of the camera;
transmitting the captured image to a computert;
associating the captured image or video with the information from the tracking device for the individual or group of individuals;
automatically editing each image and saving the edited image in an image database;
advising an individual or groups of individuals that a photo or video of the individual or group of individuals has been captured; and
archiving the captured image or video with the personal identification information of the individual or group of individuals.
